Europäisches Patentamt

European Patent Office

Office européen des brevets

(19)

(11) **EP 0 401 783 B1**

(12) **EUROPEAN PATENT SPECIFICATION**

(45) Date of publication and mention
of the grant of the patent:
**18.03.1998 Bulletin 1998/12**

(51) Int Cl.6: **G06F 7/50**, G06F 11/16

(21) Application number: **90110694.8**

(22) Date of filing: **06.06.1990**

(54) **Digital arrangement for error checking in binary adder including block carry look-ahead units**

Digitale Anordnung zur Fehlerprüfung in einem Binäraddierer mit Block-Uebertragungseinheiten

Dispositif numérique de contrôle d'erreur dans un additionneur binaire comportant des unités à retenue de bloc anticipée

(84) Designated Contracting States:
**DE FR NL**

(30) Priority: **06.06.1989 JP 142226/89**

(43) Date of publication of application:
**12.12.1990 Bulletin 1990/50**

(73) Proprietor: **NEC CORPORATION**
**Tokyo (JP)**

(72) Inventor: **Tanaka, Masayuki, c/o NEC Corporation**
**Minato-ku, Tokyo (JP)**

(74) Representative: **VOSSIUS & PARTNER**
**Postfach 86 07 67**
**81634 München (DE)**

(56) References cited:
**DE-A- 1 524 141**       **US-A- 3 470 366**
**US-A- 3 925 647**       **US-A- 4 081 860**
**US-A- 4 084 253**

- **Proc. of the IEEE 1988 Custom Integrated Circuits Conference May 1988, Rochester, New York, USA pages 2451 - 2454; Keshlear et al.: "A high-speed 16- bit cascadable ALU using an aspect standard cell approach"**
- **PATENT ABSTRACTS OF JAPAN vol. 011, no. 084 (P-556) 13 March 1987, & JP-A-61 239331 (FUJITSU LTD) 24 October 1986**

## Description

The present invention relates generally to a digital arrangement for error detection in a binary adder which comprises a plurality of block carry look-ahead units. The present invention features an effective reduction in the number of input and output terminals of a block carry look-ahead unit which forms part of an adder, and hence is highly suited for manufacturing a binary adder using large scale integration.

US-A-4081860 (D1) discloses a current mode 4-bit arithmetic logic unit with parity in order to provide parity predicting, parity checking, and carry error detection on a 4-bit plus parity binary field.

An arithmetic logic unit employing soft-saturating current mode logic gates receives as inputs two 4-bit plus parity bytes and generates a 4-bit plus parity binary output byte in accordance with the particular operational mode prescribed by a binary operation mode control signal. The unit performs sixteen binary arithmetic or sixteen Boolean logic operations on two 4-bit plus parity input fields Ai and Bi. A carry-in input CIN, a carry generate output G, and a carry propagate output P are provided so that the device can be utilized in a full carry look-ahead configuration with a separate carry look-ahead array. A special output F=O is provided for zero detection purposes. In addition to the arithmetic and logic operations, the unit performs parity checking, parity carry, and parity prediction operations on the 4-bit plus parity binary input signals, and accordingly special inputs in the form of a carry-in duplicate CID, parity of the half-sums HS, a parity of the half-parities HP, parity of the carries PC, carry error $\overline{CE}$, and parity checking command PCK are provided. A special output E indicates a carry or half-sum parity error. A carry-out signal COUT is also provided.

US-A-47084253 (D2) was filed by the same applicant as D1 on the same date and is directed to improvements of the 4-bit arithmetic logic unit disclosed in D1. D2 offers a greater flexibility regarding the bit length of the binary date which may be operated compared to the 4-bit arithmetic logic unit disclosed in D1.

US-A-3925647 is directed to logic for checking the correctness of half-sum, full-sum (or result) and look-ahead carry of a two-operand adder.

DE-A-1524141 describes an adder comprising a block carry look-ahead unit to provide parity bit prediction and checking.

In the Proceedings of the IEEE 1988, Custom Integrated Circuits Conference, May 1988, Rochester, New York, U.S.A., pp. 2451-2454; Keshlear et al. "A high speed 16-bit cascadable ALU using an aspect standard cell approach", a 16-bit cascadable ALU architecture has been described which uses full carry look-ahead and supports expansion up to a 64 bit word size.

Error detection in digital processing apparatus involves the process of detecting signals which are different from those appearing in a properly operating system. An error is a logical output which deviates from that which is output by a properly operating circuit.

Before describing prior art techniques, a brief description of a binary adder will be given.

A binary adder adds two operands A and B together with to give a resultant sum S. The addition is done on a digit-by-digit basis. The following notation is used in the subsequent description:

$$A = \{a(n), a(n-1), ..., a(1), a(0)\}$$

$$B = \{b(n), b(n-1), ...., b(1), b(0)\}$$

where A and B are numbers, the small a's and b's are the digits of the numbers. The sum digit S(n) for the n-th stage (n arbitrary) depends not only on the input digits to that stage a(n), b(n), but also on the carry from the previous stage C(n-1). It will be understood by those skilled in the art that the carry of the stage C(n) is given as follows:

$$C(n) = a(n) \cdot b(n) + \{a(n) \oplus b(n)\} \cdot C(n-1) \qquad (1)$$

where "·" "+" and "⊕" symbolize AND, OR and Exclusive-OR logic operators, respectively.

Binary adders can be classified into two main categories according to how the carries are handled. A ripple adder derives its name from the fact that each carry digit depends on the preceding carry signal, which in turn depends on another preceding carry signal. This requires that the overall carry circuitry form a serial string with the (n-1)th carry signal feeding C(n), carry generation circuitry, etc. This can be seen from equation (1) which can be rewritten as follows:

$$C(n) = G(n) + P(n) \cdot C(n-1) \qquad (2)$$

where G(n) is a carry generation variable or output (= a(n)·b(n)), P(n) is a carry propagation variable or output (= a(n) ⊕ b(n)).

It can be seen that time is lost when the carries ripple through the entire adder. Thus, to speed up the addition process, the carry path can be shortened by using a parallel implementation of equation (2) called "look-ahead". It is understood from equation (2) that C(n-1) can be represented as follows:

$$C(n-1) = G(n-1) + P(n-1) \cdot C(n-2) \qquad (3)$$

Substituting equation (3) into (2), we get

$$C(n) = G(n) + P(n) \cdot G(n-1) + P(n) \cdot P(n-1) \cdot C(n-2)$$

Further expansion yields the carry look-ahead equation for the n-th carry digit

$$C(n) = G(n) + P(n) \cdot G(n-1) + P(n) \cdot P(n-1) \cdot G(n-2) +$$

$$P(n) \cdot P(n-1) \cdot P(n-2) \cdot G(n-3) + \dots \qquad (4)$$

A carry generated using equation (4) is faster than the ripple carry equation because it does not depend on the previous carry but on the carry propagate and carry generate variables. All of the carry propagate and carry generate variables can be produced in one level of logic.

It is a known practice to functionally or physically divide an adder, which implements long binary numbers, into a plurality of BCLA (block carry look-ahead) units. Each BCLA unit performs part of addition utilizing the carry look-ahead scheme between the units.

According to one known error detecting technique wherein a BCLA unit type of binary adder is used, two like carry signals are generated: one for addition and the other for error detection.

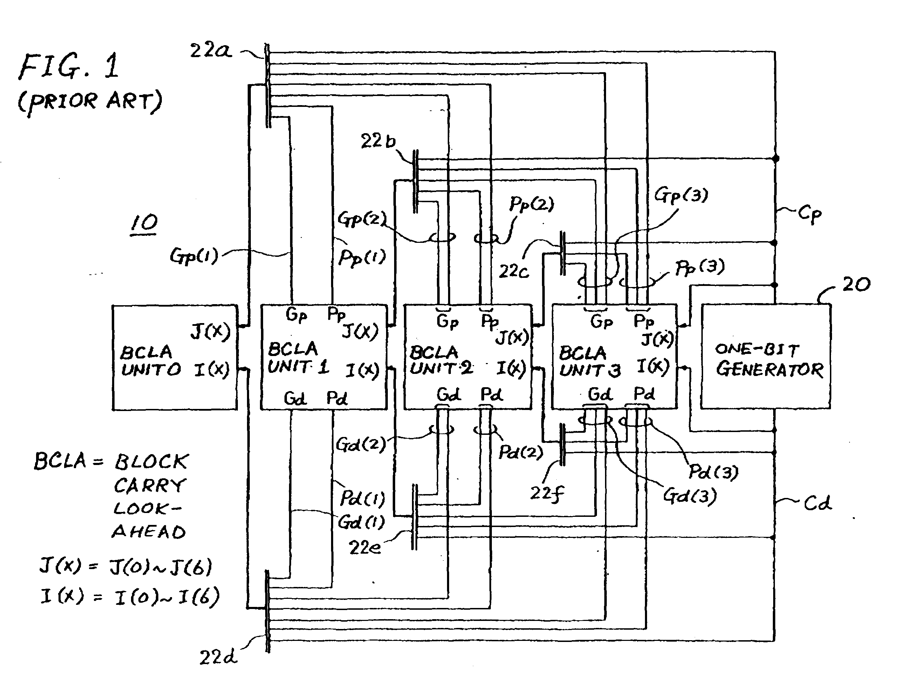

This kind of prior art will be discussed in detail with reference to Figs. 1 to 3.

Fig. 1 illustrates in block diagram form, a known binary adder 10 which comprises four BCLA units 0, 1, 2 and 3 and a one-bit generator 20. The one-bit generator 20 generates a single bit Cp or Cd which assumes a logic "0" while the adder is used for addition and assumes a logic "1" in the case the adder is used for subtraction. The one-bit generator 20 applies a logic "1", in the case of subtraction, to the least significant digit of each of the units 0 to 3 in order to change a subtrahend from 1's complement into 2's complement. However, it is worth noting that this one-bit generator 20 is not directly concerned with the present invention.

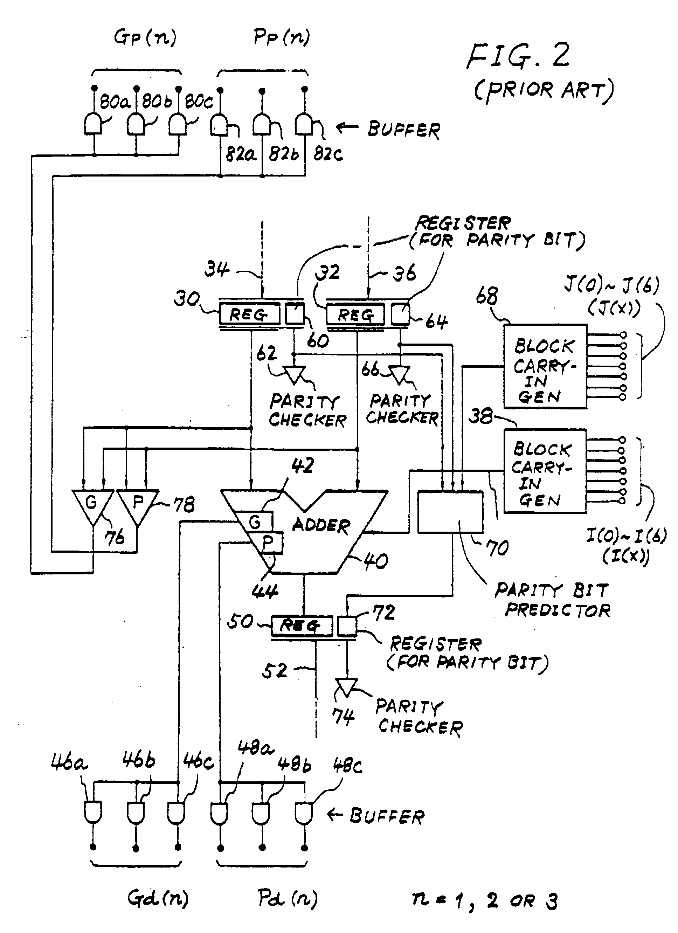

As shown in Fig. 1, each of the BCLA units 1, 2 and 3 is provided with two kinds of output terminals: one is denoted by Gp, Pp and the other by Gd, Pd. The output terminals Gp, Pp are provided for error detection, while the output terminals Gd, Pd for addition. Carry generate and carry propagate variables (Gp(n), Pp(n) wherein n assumes 1, 2 or 3), derived from the output terminals Gp and Pp, are illustrated as being applied to an input terminal J(x). However, it should be noted that this terminal is actually comprised of seven individual input terminals J(0)-J(6) (such as shown in Fig. 2 for example). The indication J(x) is used instead of J(0)-J(6) merely for simplifying the drawing. Similarly, carry generate and carry propagate variables (Gd(n) and Pd(n)), derived from the output terminals Gd and Pd, are illustrated as being applied to an input terminal I(x) which as shown in Fig. 2 similarly comprises seven input terminals I(0)-I(6). As with the case of J(x), indication by I(x) instead of I(0)-I(6) is merely for simplifying the drawing.

Each of the symbols bearing reference numerals 22a-22f, indicates that a plurality of separate input lines thereto is represented by a single line merely by way of simplifying the drawing.

Fig. 2 illustrates in block diagram form, one of the BCLA units shown in Fig. 1. It should be noted that the BCLA units 0, 1, 2 and 3 each have the same circuit configuration. The Fig. 2 arrangement is functionally grouped into two operating portions: one is for data processing and the other is for error detection.

The first part, viz., the data processing arrangement will be described first.

Registers 30 and 32 store two operands to be added which are applied via lines 34, 36 respectively. A block carry-in generator 38 is supplied, via the seven input terminals I(0) to I(6), with the carry generate variables Gd(n) and the carry propagate variables Pd(n) from the other BCLA units. The generator 38 outputs a block carry-in using the carry look-ahead techniques, which carry-in is applied to an adder 40. In more detail, the carry-in is applied to the least significant digit of the operand to be implemented in the unit in question. The adder 40 is further supplied with the operands stored within the registers 30, 32 and performs addition in a known manner.

The adder 40 includes two detectors 42, 44. The detector 42 outputs the carry generate variables Gd(n), while the other detector 44 outputs the carry propagate variables Pd(n). The variables Gd(n) and Pd(n) are applied to the other BCLA units through buffers 46a-46c and 48a-48c, respectively. A register 50 stores the resultant sum applied from the adder 40, which is delivered outside the Fig. 2 unit via a line 52.

The arrangement for error detection of the Fig. 2 unit will be described below.

A register 60 stores a parity bit which is attached to a set of data bits stored in the register 30. A parity checker 62, coupled to the registers 30 and 60, performs a parity check on the data bits and the parity bit. Similarly, a register 64 stores a parity bit which is attached to a set of data bits within the regiter 32, and a parity checker 66 implements a parity check on the bits stored in the registers 32 and 64.

A block carry-in generator 68, which has the same configuration as the above-mentioned generator 38, receives the carry generate variables Gp(n) and the carry propagate variables Pp(n) from the other BCLA units by way of the seven input terminals J(0)-J(6). The generator 68 outputs a block carry-in using the carry look-ahead technique, which carry-in is applied to a parity bit predictor 70. The predictor 70 is further supplied with the two bit arrays from the two sets of registers (30, 60) and (32, 64) respectively, and applies a predicted parity bit to a register 72. A parity check on the data array stored in the registers 50 and 72 is performed at a parity checker 74. On the other hand, the two operand data stored in the two registers 30 and 32, are applied to two detectors 76 and 78, which respectively perform the same logical functions as the above-mentioned detectors 42 and 44. That is to say, the detector 76 outputs the carry generate variable Gp(n), while the other detector 78 outputs the carry propagate variable Pp(n). The variables Gp(n) and Pp(n) are applied to the other BCLA units through buffers 80a-80c and 82a-82c, respectively.

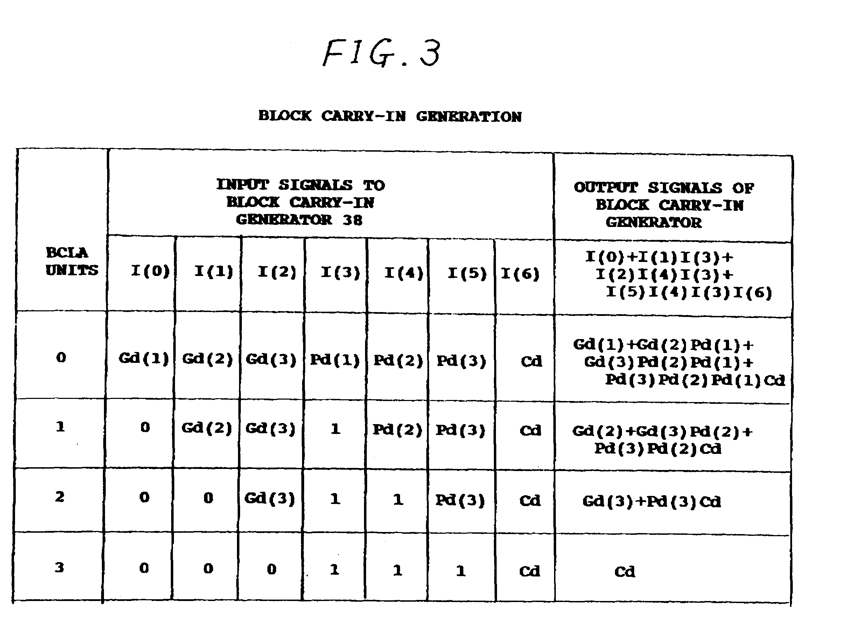

Fig. 3 is a table showing (a) the variables Gd(n) and Pd(n) applied to the block carry-in generator 38 through the input terminals I(0)-I(6) and (b) logical expressions for generating the output signals of the block carry-in generator 38, both with respect to the BCLA units 0, 1, 2 and 3. It should be noted that the logical AND notation "·" is omitted in the logical expressions in Fig. 3.

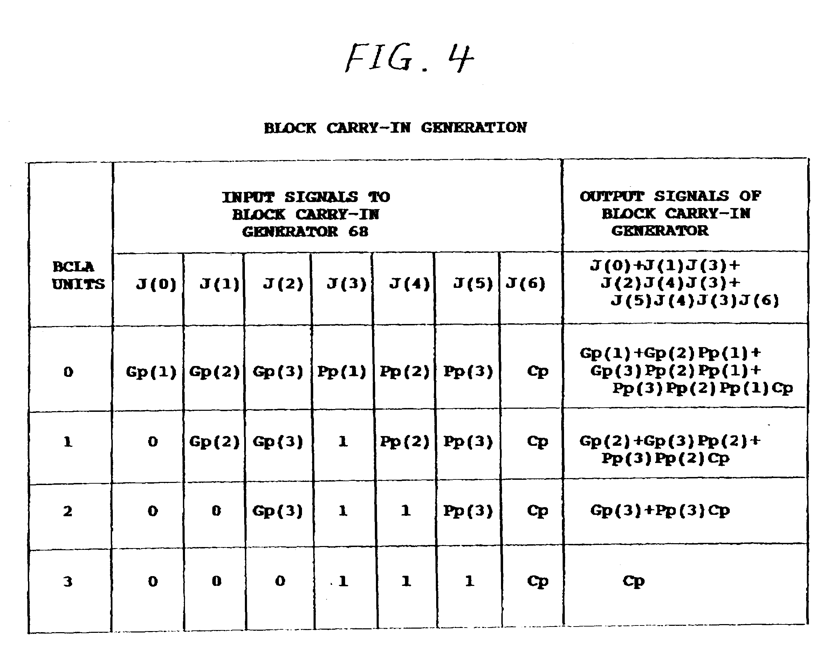

A table shown in Fig. 4 is identical with that of Fig. 3 except that the first mentioned table is directed to the other variables Gp(n) and Pp(n) for use in error detection.

Returning to Fig. 2, each of the parity checkers 62 and 66 performs parity checking on the operands stored in the corresponding register 30 or 32. On the other hand, in the event that the parity checker 74 detects a parity error, it is understood that either of the data and error detecting arrangements malfunctions. Even if both the data and error detecting arrangements simultaneously break down in a manner that parity checker 74 is unable to detect the abnormality, it is practically rare that such an abnormality continues to deceive said checker.

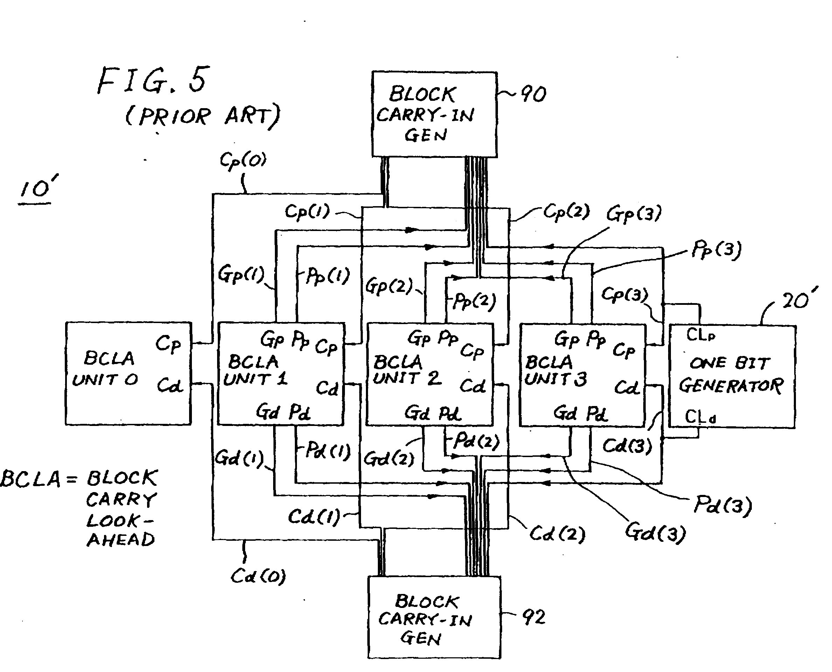

A second known digital arrangement for error detection in a binary adder will be discussed with reference to Figs. 5 to 7. A binary adder 10' shown in Fig. 5 differs from the counterpart 10 of Fig. 2 in that the former arrangement is provided with block carry-in generators 90 and 92 outside BCLA units 0 to 3.

The binary adder 10' further includes, in addition to the four BCLA units 0 to 3, a one-bit generator 20'. The generator 20' operates in exactly the same manner as the generator 20 disclosed in connection with Fig. 1, so that a further description will be omitted for simplicity. However, it should be noted that the outputs of the one-bit generator 20' are denoted by CLp and CLd instead of Cp and Cd as in Fig. 1.

As illustrated in Fig. 5, each of the BCLA units 0, 1, 2 and 3 is provided with two kinds of output terminals: one is denoted by Gp, Pp and the other by Gd, Pd. As referred to in connection with Fig. 1, the output terminals Gp, Pp are provided for error detection, while the output terminals Gd, Pd for implementing addition. The carry generate and carry propagate variables Gp(n) and Pp(n) (wherein "n" assumes 1, 2 or 3) are applied to a block carry-in generator 90 provided in a error detection path. Similarly, the carry generate and carry propagate function variables Gd(n) and Pd(n) are applied to another block carry-in generator 92 provided for addition. Reference letters Cp and Cd represent input terminals coupled to receive the outputs Cp(n) and Cd(n) (n= 1, 2, 3) of the block carry-in generators 90 and 92, respectively. For the convenience of description, reference letters Cp and Cd each also represent a carry.

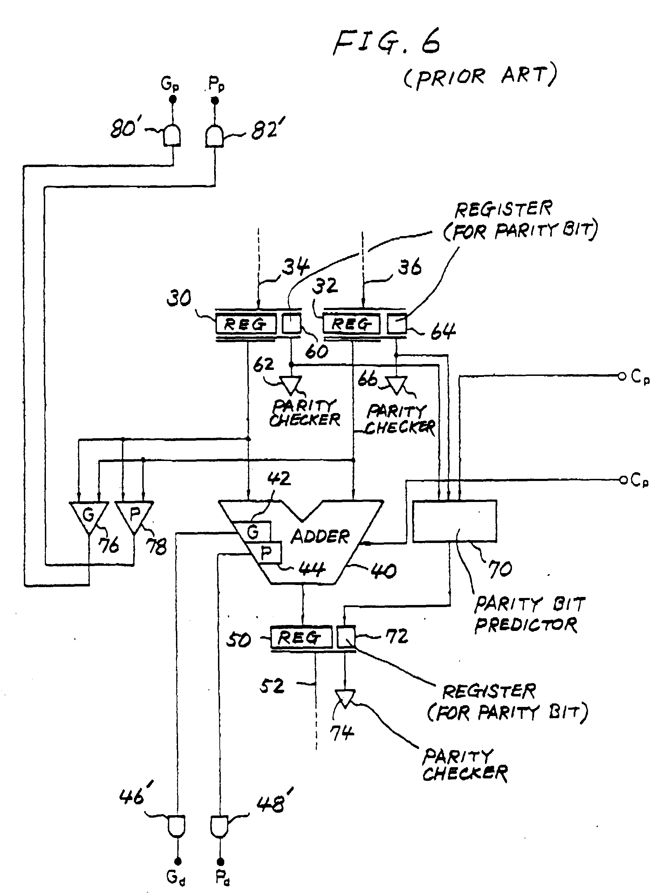

Fig. 6 illustrates in block diagram form one of the BCLA units shown in Fig. 5. The BCLA units 0, 1, 2 and 3 each has the same circuit configuration. Since the arrangement of Fig. 6 has essentially the same configuration as that of Fig. 2, like elements are denoted by like reference numerals.

The circuit arrangement of Fig. 6 differs from that of Fig. 2 in that (a) the output of each of the variable detectors 42, 44 of the former arrangement is not split and hence only two buffers 46' and 48' are provided; (b) each output of the carry generate and carry propagate variable detectors 76, 78 of the former arrangement is no longer split and hence only two buffers 80' and 82' are provided; and (c) the former arrangement is not provided with any block carry-in generators. Other than this, the remaining portions of Figs. 6 and 2 are identical. Since the Fig. 6 arrangement operates in exactly the same manner as the Fig. 2 arrangement further description regarding the operation thereof is considered unnecessary.

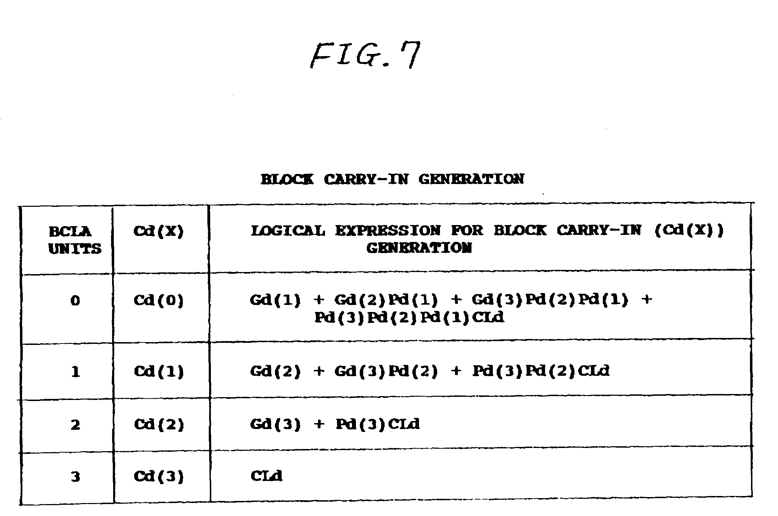

Fig. 7 is a table showing (a) the outputs of the block carry-in generator 92 and (b) logical expressions for generating the outputs of the generator 92, both with respect to the BCLA units 0 to 3. It will be readily understood that the table shown in Fig. 7 is applicable to the outputs Cp(n) of the block carry-in generator 90.

Recent advances in LSI technology have permitted notable reductions in chip size. However, the full benefit of this size reduction capability has not been realized in that the pins, which are inherently required to be provided along the side of the chips, must have a finite size so as to exhibit the required rigidity and longevity. Thus, when a large number of pins are required, as the pin size cannot be reduced beyond given limits, the spacing therebetween must be reduced. This leads to crowding, the possibility of being physically brought into contact with one another and a reduction in reliability due to the large number of connections which must be simultaneously achieved.

In addition to this in the event that a large number of ports are required cross-talk reduces the noise margin and hence lower yield rate.

Hence, a need for circuit arrangements which enable the number of pins and terminals which must be provided, to be reduced, has come into existence. By way of example the adder circuit arrangement shown in Fig. 2 requires a large number of input and output ports. This is brought about in the above described adder circuits by the provision of both a data processing arrangement and an independent parallel error checking arrangement.

It is an object of the present invention to provide a block carry look-ahead unit type of binary adder which is provided with an improved error detection arrangement with a small number of input and output ports as compared with the known adders.

Another object of the present invention is to provide a binary adder comprised of a plurality of block carry look-ahead units each of which includes a simplified arrangement for error detection. These objects are achieved by the features of claims 1 and 4, respectively.

In brief, a binary adder is comprised of a plurality of block carry look-ahead units. Each of the units includes a block carry-in generator, an adding section, a block carry-out generator and a carry coincidence checker. The block carry-in generator is arranged to receive a plurality of carry generate variables and a plurality of carry propagate variables from the other units, generating a carry-in using carry look-ahead scheme. The adding section is coupled to receive the carry-in from said block carry-in generator and further receives two operand data to be added and generates a resultant sum of the two operand data. The block carry-out generator receives the two operand data and also receives the carry-in from the block carry-in generator. The block carry-out generator produces a carry-out of the unit to be applied to a lower order block carry look-ahead unit. The carry coincidence checker is arranged to receive the carry-in from the block carry-in generator and also receives a carry from another block carry look-ahead unit. The carry, which is applied from another unit, corresponds to the carry-out. The checker performs a coincidence check between the carry-in and the carry applied from another unit.

A binary adder especially includes a plurality of block carry look-ahead units, the block carry look-ahead unit comprising:
first means arranged to receive a plurality of carry generate variables and a plurality of carry propagate variables, said first means generating a first carry using carry look-ahead scheme; second means coupled to receive said first carry from said first means, said second means further receiving first and second operand data to be added and generating a resultant sum of said first and second operand data; third means coupled to receive said first and second operand data and coupled to receive said first carry from said first means, said third means generating a second carry to be applied to another block carry look-ahead unit; and fourth means coupled to receive said first carry and coupled to receive a third carry from another block carry look-ahead unit, said third carry corresponding to said second carry, said fourth means performing a coincidence check between said first and third carries.

Another binary adder especially includes a plurality of block carry look-ahead units, the block carry look-ahead unit comprising: first means arranged to receive a plurality of carry generate variables and a plurality of carry propagate variables, said first means generating a first carry using carry look-ahead scheme; second means coupled to receive said first carry from said first means, said second means further receiving first and second operand data to be added and generating a resultant sum of said first and second operand data; third means coupled to receive said first and second operand data and coupled to receive said first carry from said first means, said third means generating a second carry to be applied to another block carry look-ahead unit; fourth means coupled to receive said first carry and coupled to receive a third carry from another block carry look-ahead unit, said third carry corresponding to said second carry, said fourth means performing a coincidence check between said first and third carries; fifth means coupled to receive said first carry from said first means, said fifth means being arranged to receive said first operand data plus a first parity bit attached thereto and also arranged to receive said second operand data plus a second parity bit attached thereto, said fifth means predicting a third parity bit and generating said third parity bit; sixth means coupled to store said resultant sum generated from said second means; seventh means coupled to store said third parity bit from said fifth means; and eighth means coupled to said sixth and seventh means and performing a parity check on the resultant sum and said third parity bit.

Still another binary adder especially includes a plurality of block carry look-ahead units, the block carry look-ahead unit comprising: first means arranged to receive a plurality of carry generate variables and a plurality of carry propagate variables, said first means generating a first carry using carry look-ahead scheme; second means coupled to receive said first carry from said first means, said second means further receiving first and second operand data to be added and generating a resultant sum of said first and second operand data; third means coupled to receive said first and second operand data and coupled to receive said first carry from said first means, said third means generating a second carry to be applied to another block carry look-ahead unit; fourth means coupled to receive said first carry and coupled to receive a third carry from another block carry look-ahead unit, said third carry corresponding to said second carry, said fourth means performing a coincidence check between said first and third carries; fifth means coupled to receive said first carry from said first means, said fifth means being arranged to receive said first operand data plus a first parity bit attached thereto and also arranged to receive said second operand data plus a second parity bit attached thereto, said fifth means predicting a third parity bit and generating said third parity bit; sixth means coupled to store said resultant sum generated from said second means; seventh means coupled to store said third parity bit from said fifth means; eighth means coupled to said sixth and seventh means and performing a parity check on the resultant sum and said third parity bit; ninth means coupled to said second means and producing a carry generate variable, said carry generate variable being applied to another block carry look-ahead unit; and tenth means coupled to said second means and producing a carry propagate variable, said carry propagate variable being applied to another block carry look-ahead unit.

Still another binary adder especially includes a plurality of block carry look-ahead units and a block carry-in generator, said block carry-in generator being provided externally of said plurality of block carry look-ahead units and being coupled thereto, said block carry-in generator producing a carry-in which is applied to the least significant digit of the block carry look-ahead units, the block carry look-ahead unit comprising: first means coupled to receive said carry-in from said block carry-in generator, said first means further receiving first and second operand data to be added and generating a resultant sum of said first and second operand data; second means coupled to receive said first and second operand data and coupled to receive said carry-in from said block carry-in generator, said second means generating a first carry to be applied to another block carry look-ahead unit; and third means coupled to receive said carry-in from said block carry-in generator and coupled to receive a second carry from another block carry look-ahead unit, said second carry corresponding to said first carry, said third means performing a coincidence check between said carry-in and said second carry.

Still another binary adder especially includes a plurality of block carry look-ahead units and a block carry-in generator, said block carry-in generator being provided externally of said plurality of block carry look-ahead units and being coupled thereto, said block carry-in generator producing a carry-in which is applied to the least significant digit of the block carry look-ahead units, the block carry look-ahead unit comprising: first means coupled to receive said carry-in from said block carry-in generator, said first means further receiving first and second operand data to be added and generating a resultant sum of said first and second operand data; second means coupled to receive said first and second operand data and coupled to receive said carry-in from said block carry-in generator, said second means generating a first carry to be applied to another block carry look-ahead unit; third means coupled to receive said carry-in from said block carry-in generator and coupled to receive a second carry from another block carry look-ahead unit, said second carry corresponding to said first carry, said third means performing a coincidence check between said carry-in and said second carry; fourth means coupled to receive said carry-in from said block carry-in generator, said fourth means being arranged to receive said first operand data plus a first parity bit attached thereto and also arranged to receive said second operand data plus a second parity bit attached thereto, said fourth means predicting a third parity bit and generating said third parity bit; fifth means coupled to store said resultant sum generated from said first means; sixth means coupled to store said third parity bit from said fourth means; and seventh means coupled to said fifth and sixth means and performing a parity check on the resultant sum and said third parity bit.

Still another binary adder especially includes a plurality of block carry look-ahead units and a block carry-in generator, said block carry-in generator being provided externally of said plurality of block carry look-ahead units and being coupled thereto, said block carry-in generator producing a carry-in which is applied to the least significant digit of the block carry look-ahead units, the block carry look-ahead unit comprising: first means coupled to receive said carry-in from said block carry-in generator, said first means further receiving first and second operand data to be added and generating a resultant sum of said first and second operand data; second means coupled to receive said first and second operand data and coupled to receive said carry-in from said block carry-in generator, said second means generating a first carry to be applied to another block carry look-ahead unit; third means coupled to receive said carry-in from said block carry-in generator and coupled to receive a second carry from another block carry look-ahead unit, said second carry corresponding to said first carry, said third means performing a coincidence check between said carry-in and said second carry; fourth means coupled to receive said carry-in from said block carry-in generator, said fourth means being arranged to receive said first operand data plus a first parity bit attached thereto and also arranged to receive said second operand data plus a second parity bit attached thereto, said fourth means predicting a third parity bit and generating said third parity bit; fifth means coupled to store said resultant sum generated from said first means; sixth means coupled to store said third parity bit from said fourth means; seventh means coupled to said fifth and sixth means and performing a parity check on the resultant sum and said third parity bit; eight means coupled to said first means and producing a carry generate variable, said carry generate variable being applied to said block carry-in generator; and ninth means coupled to said first means and producing a carry propagate variable, said carry propagate variable being applied to said block carry-in generator.

The features and advantages of the present invention will become more clearly appreciated from the following description taken in conjunction with the accompanying drawings in which like elements are denoted by like reference numerals and in which:

Fig. 1 is a block diagram showing a first known binary adder including a plurality of block carry look-ahead (BCLA) units, this drawing having been referred to in the opening paragraphs of the instant specification;
Fig. 2 is a block diagram showing in detail one of the BCLA units shown in Fig. 1, Fig. 2 having been referred to in the opening paragraphs of the instant specification;
Figs. 3 and 4 each is a table showing the relationship between input and output signals of the block carry-in generators each of which forms part of the BCLA unit;
Fig. 5 is a block diagram showing a second known binary adder including a plurality of BCLA units, this drawing having been referred to in the opening paragraphs of the instant specification;
Fig. 6 is a block diagram showing in detail one of the BCLA units shown in Fig. 5, Fig. 6 having been referred to in the opening paragraphs of the instant specification;

Fig. 7 is a table showing the relationship between input and output signals of the block carry-in generators each of which forms part of the BCLA unit;

Fig. 8 is a block diagram showing a first embodiment of the present invention;

Fig. 9 is a block diagram showing in detail one of the BCLA units shown in Fig. 8;

Fig. 10 is a block diagram showing a second embodiment of the present invention; and

Fig. 11 is a block diagram showing in detail one of the BCLA units shown in Fig. 10.

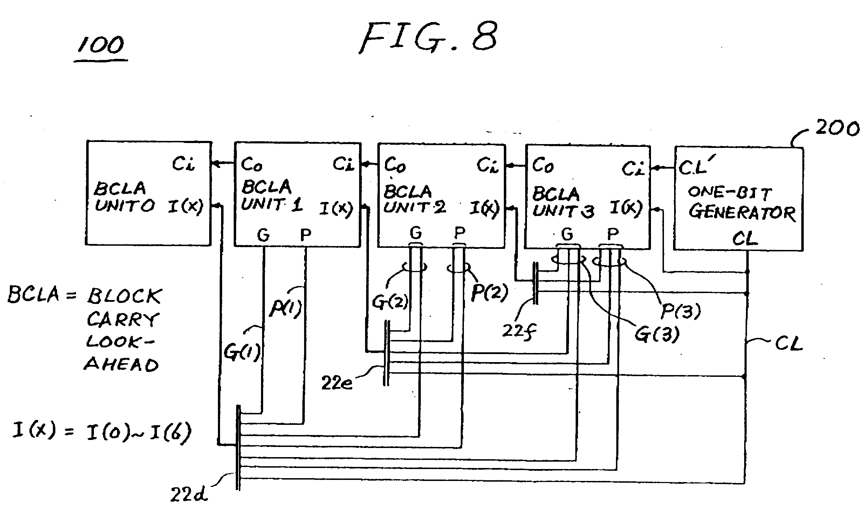

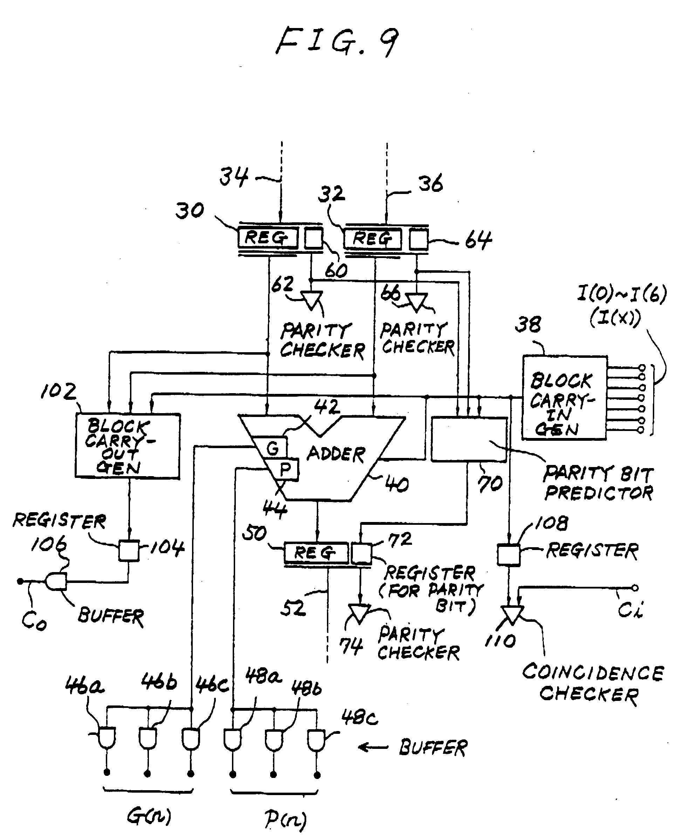

A first embodiment of the present invention will be discussed with reference to Figs. 8 and 9. The first embodiment corresponds to the first known adder shown in Figs. 1 and 2.

Fig. 8 schematically illustrates a binary adder 100 according to this invention, in block diagram form. The adder 100 comprises four BCLA units 0, 1, 2 and 3 and a one-bit generator 200. The generator 200 operates in essentially the same manner as its counterpart 20 of Fig. 1. That is to say, the generator 200 outputs one bit signal CL and CL' each of which assumes a logic "0" while the adder is used for addition and assumes a logic "1" while the adder is used for subtraction. Further detailed description of the generator 200 is considered to be unnecessary. However, the difference between CL and CL' will be described later.

As shown in Fig. 8, each of the BCLA units 1, 2 and 3 is provided with two output terminals G and P from which the carry generate and carry propagate variables or outputs G(n) and P(n) are derived (n assumes 1, 2 or 3). The variables G(n) and P(n) from one unit are applied to an input terminal(s) I(x) of the subsequent unit(s). As mentioned in connection with the circuit shown in Fig. 2, the input terminal I(x) includes seven terminals I(0)-I(6). Each symbol bearing a reference numeral 22d, 22e or 22f, indicates that a plurality of separate input lines thereto is collected into a single line merely for simplifying the drawing. Finally, reference letters Ci and Co indicate a block input carry and a block output carry, respectively. For the convenience of description, Ci also represents the terminal to which the input carry Ci is applied, while Co also represents tha terminal from which the output carry Co is generated.

Fig. 9 illustrate one of the BCLA units 0 to 3 in block diagram form. It should be noted that the unit 0 is located at the highest order and hence is not required to generate any generate and propagate variables as well as a block output carry Co but can be configured in the same manner as the other units 1 to 3.

Since the arrangement of Fig. 9 is essentially similar to that shown in Fig. 2, only the differences therebetween will be described.

The following blocks are not provided in the Fig. 9 arrangement: the module carry-in generator 68 provided for error detection, the carry generate detector 76, the carry propagate detector 78, and the buffers 80a-80c and 82a-82c.

On the other hand, the blocks listed below are newly added to the Fig. 9 arrangement: a block carry-out generator 102, a buffer 104, registers 106 and 108, and a coincidence checker 110.

The remaining portions of the Fig. 9 arrangement are identical to their counterparts of Fig. 2.

As will be appreciated, only one block carry-in generator 38 is provided and hence the parity bit predictor 70 is coupled to receive the carry which is applied from the generator 38. This means that in the event that an error occurs in a transmission path up to the block carry-in generator 38 inclusive, the parity checker 74 is no longer able to detect the above-mentioned error. In more detail, this problem arises from the fact that the input carry from the generator 38 is applied to both the adder 40 and the parity bit predictor 70.

However, this problem can be solved by the above-listed newly provided blocks.

The block carry-out generator 102 receives the operand data from the registers 30, 32 as well as the input carry from the carry-in generator 38, calculating an output carry of the unit. The output carry Co of the unit is stored in the register 104 and then applied via the buffer 106 to the higher order BCLA unit as an input carry Ci. The register 108 is supplied with the carry generated by the block carry-in generator 38. the coincidence checker 110 is supplied with the carry signal stored in the register 108 and an input carry ci applied from the lower order unit, and checks to see if the two input carries are coincident.

The coincidence checker 110 is arranged to check to see if the carry from the generator 38 coincides with the carry applied from the BCLA unit positioned at a lower order. Therefore, the aforesaid error which is unable to be detected at the parity checker 74, can be checked by the coincidence checker 110 with a high probability.

As referred to above, the parity checker 74 is unable to check an error which occurs in the block carry-in generator 38. However, the checker 74 is able to check an error which occurs in the data processing arrangement including blocks 40, 50 and 72. It goes without saying that the other parity checkers 62 and 66 operate in exactly the same manner as those provided in the known adders.

It should be noted that the register 104 provided for one unit is to adjust the timing when the output carry Co is applied to the coincidence checker 110 of the other unit. More specifically, the register 104 delays the output carry Co by one clock in order to compensate for one clock delay of the carry from the generator 38 at the register 108. It is understood therefore that the one-bit signal CL' from the generator 200 (Fig. 8) should be delayed by one operation timing prior to being applied to the coincidence checker 110 within the unit 3. This is the reason why the signal CL' is denoted differently with the signal CL.

The block carry-in generator 38 produces the carry in exactly the same manner as the counterpart of Fig. 2 as referred to in connection with Figs. 3 and 4.

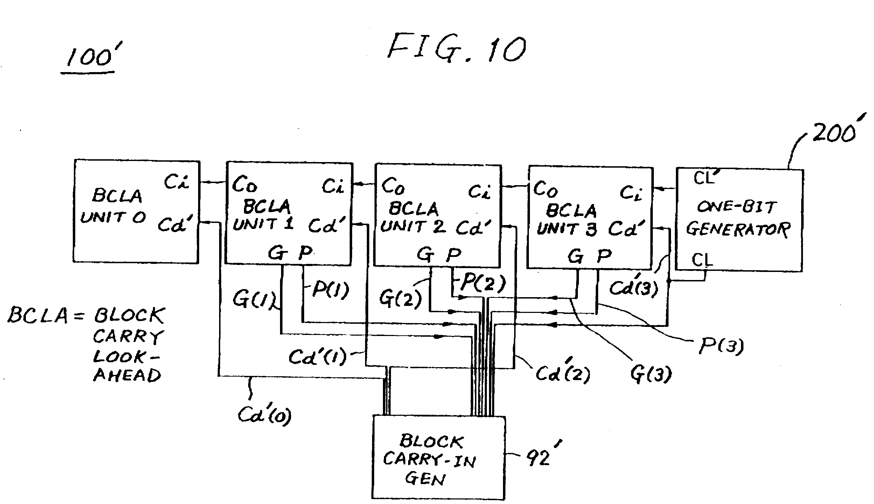

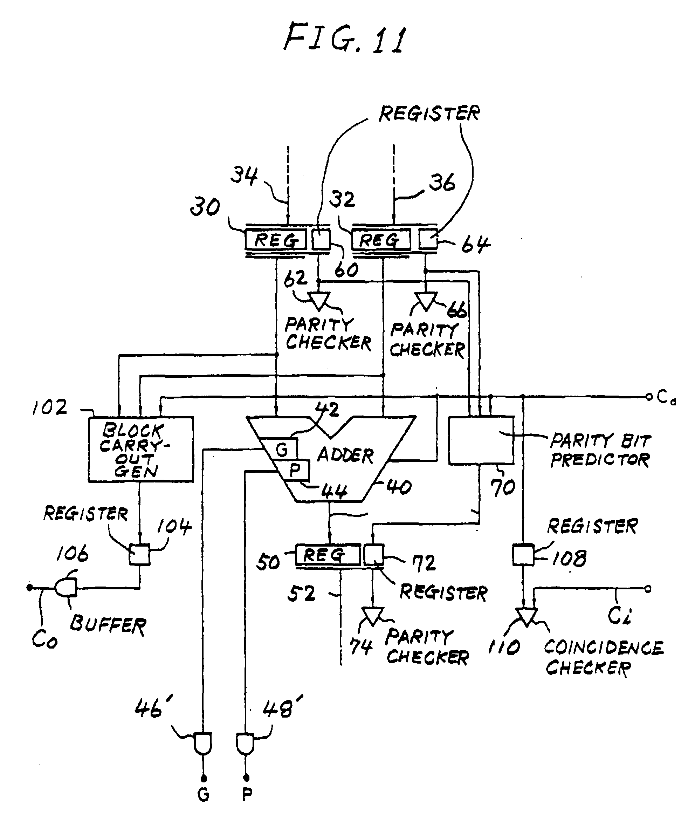

A second embodiment of the present invention will be discussed with reference to Figs. 10 and 11. The second embodiment corresponds to the second known adder shown in Fig. 5 and 6.

A binary adder 100' shown in Fig. 10 differs from the counterpart 100 of Fig. 8 in that the former arrangement is provided with a block carry-in generator 92' externally of BCLA units 0 to 3.

The binary adder 100' further includes a one-bit generator 200' in addition to the four BCLA units 0 to 3. The generator 200' operates in exactly the same manner as the generator 200 disclosed in connection with Fig. 8, so that a further description is considered unnecessary.

As referred to in connection with Fig. 8, each of the BCLA units 1, 2 and 3 is provided with two kinds of output terminals G and P from which the carry generate and carry propagate variables $G(n)$ and $P(n)$ are derived ($n$ assumes 1, 2 or 3). However, these variables $G(n)$ and $P(n)$ are applied to the block carry-in generator 92' in the second embodiment. The generator 92' applies the output thereof (viz., a carry-in) to a terminal Cd' of each of the BCLA units 0 to 3. The reference letters Ci and Co, which are used in the first embodiment, are also used for the same purposes.

Fig. 11 illustrates in block diagram form, one of the BCLA units shown in Fig. 10. The BCLA units 0, 1, 2 and 3 each has the same circuit configuration. Since the arrangement of Fig. 11 has essentially the same configuration as that of Fig. 9, like elements are denoted by like reference numerals.

The circuit arrangement of Fig. 11 differs from that of Fig. 8 in that (a) the output of each of the variable detectors 42, 44 of the former arrangement is not split and hence only two buffers 46' and 48' are provided; and (b) the former arrangement is not provided with any block carry-in generator. Other than this, the remaining portions of Fig. 11 and 9 are identical. Since the Fig. 11 arrangement operates in exactly the same manner as the Fig. 9 arrangement further description regarding the operation thereof is considered unnecessary.

It should be noted that the addition within the BCLA unit itself may be performed using the aforesaid carry ripple scheme or the carry look-ahead scheme.

It should be noted that the present invention is equally applicable to both adders and subtractors.

**Claims**

1. A binary adder including N block carry look-ahead units (BCLA units 0-3), $N \geq 2$, each $i$th block carry look-ahead unit, where $i=0...N-1$, comprising:

first means (38), said $i$th first means being arranged to receive N-i-1 carry generate variables ($G(n)$) and N-i-1 carry propagate variables ($P(n)$) from previous N-i-1$^{th}$ block carry look-ahead units, said first means generating an $i$th first carry using carry look-ahead scheme;

second means (40), said second means coupled to receive said first carry from said first means, said second means further receiving $i$th first and $i$th second operand data to be added and generating a resultant sum of said $i$th first and $i$th second operand data and said $i$th first carry and generating $i$th carry generate variable and $i$th carry propagate variable;

third means (102), said third means coupled to receive said $i$th first and $i$th second operand data and coupled to receive said $i$th first carry from said first means, said third means generating an $i$th second carry to be applied to a next i-1$^{th}$ block carry look-ahead unit; and

fourth means (110), said fourth means coupled to receive said $i$th first carry and coupled to receive a third carry from a previous i+1$^{th}$ block carry look-ahead unit, said third carry corresponding to a previous i+1$^{th}$ second carry generated by said third means of said previous i+1$^{th}$ block carry look-ahead unit, said fourth means performing a coincidence check between said $i$th first carry and said third carry to check for an error in said binary adder.

2. A binary adder as claimed in claim 1, further comprising:

fifth means (70), said fifth means coupled to receive said first carry from said first means, said fifth means being arranged to receive said first operand data plus a first parity bit attached thereto and also arranged to receive said second operand data plus a second parity bit attached thereto, said fifth means predicting a third parity bit and generating said third parity bit;

sixth means (50), said sixth means coupled to store said resultant sum generated from said second means;

seventh means (72), said seventh means coupled to store said third parity bit from said fifth means; and

eighth means (74), said eighth means coupled to said sixth and seventh means and performing a parity check on the resultant sum and said third parity bit.

3. A binary adder as claimed in claim 1 or 2, further comprising:

ninth means (42), said ninth means coupled to said second means and producing a carry generate variable, said carry generate variable being applied to another block carry look-ahead unit; and

tenth means (44), said tenth means coupled to said second means and producing a carry propagate variable, said carry propagate variable being applied to another block carry look-ahead unit.

4. A binary adder including N block carry look-ahead units (BCLA units 0-3), N≥2, and a block carry-in generator (92'), said block carry-in generator being provided externally of said N block carry look-ahead units and being coupled thereto, said block carry-in generator producing N-1 carry-in which are applied to the corresponding one of the N-1 block carry look-ahead units, said N-1 carry in being generated from N-1 carry generate variables (G(n)) and N-1 carry propagate variables (P(n)) received from corresponding N-1 block carry look-ahead units using carry look-ahead scheme, the $i^{th}$ block carry look-ahead unit, i=0...N-1, comprising:

first means (40), said first means coupled to receive said $i^{th}$ carry-in from said block carry-in generator, said first means further receiving $i^{th}$ first and $i^{th}$ second operand data to be added and generating a resultant sum of said $i^{th}$ first and $i^{th}$ second operand data and $i^{th}$ carry-in and generating $i^{th}$ carry generate variable and $i^{th}$ carry propagate variable;

second means (102), said second means coupled to receive said $i^{th}$ first and $i^{th}$ second operand data and coupled to receive said $i^{th}$ carry-in from said block carry-in generator, said second means generating an $i^{th}$ first carry to be applied to a next $i-1^{th}$ block carry look-ahead unit; and

third means (110), said third means coupled to receive said $i^{th}$ carry-in from said block carry-in generator and coupled to receive a second carry from a previous $i+1^{th}$ block carry look-ahead unit, said second carry corresponding to a previous $i+1^{th}$ first carry generated by said second means of said previous $i+1^{th}$ block carry look-ahead unit, said third means performing a coincidence check between said $i^{th}$ carry-in and said second carry to check for an error in said binary adder.

5. A binary adder as claimed in claim 4, futher comprising:

fourth means (70), said fourth means coupled to receive said carry-in from said block carry-in generator, said fourth means being arranged to receive said first operand data plus a first parity bit attached thereto and also arranged to receive said second operand data plus a second parity bit attached thereto, said fourth means predicting a third parity bit and generating said third parity bit;

fifth means (50), said fifth means coupled to store said resultant sum generated from said first means;

sixth means (72), said sixth means coupled to store said third parity bit from said fourth means; and

seventh means (74), said seventh means coupled to said fifth and sixth means and performing a parity check on the resultant sum and said third parity bit.

6. A binary adder as claimed in claim 5, further comprising:

eight means (42), said eight means coupled to said first means and producing a carry generate variable, said carry generate variable being applied to said block carry-in generator; and

ninth means (44), said ninth means coupled to said first means and producing a carry propagate variable, said carry propagate variable being applied to said block carry-in generator.

**Patentansprüche**

1. Binäraddierer mit N Block-Übertragseinheiten (BCLA-Einheiten 0-3), N≥2, wobei jede i-te Block-Übertragseinheit, mit i=0...N-1, aufweist:

eine erste Einrichtung (38), wobei die i-te erste Einrichtung angeordnet ist, um N-i-1 Übertragerzeugungsvariablen (G(n)) und N-i-1 Übertragweiterreichungsvariablen (P(n)) von den vorausgehenden (N-i-1) -ten Block-Übertragseinheiten zu empfangen, wobei die erste Einrichtung unter Verwendung eines Übertrags-Schemas einen i-ten ersten Übertrag erzeugt;
eine zweite Einrichtung (40), wobei die zweite Einrichtung angeschlossen ist, um den ersten Übertrag von der ersten Einrichtung zu empfangen, wobei die zweite Einrichtung ferner zu addierende i-te erste und i-te zweite Operandendaten empfängt und eine resultierende Summe der i-ten ersten und i-ten zweiten Operandendaten und des i-ten ersten Übertrags erzeugt und eine i-te Übertragerzeugungsvariable und i-te Übertragweiterreichungsvariable erzeugt;
eine dritte Einrichtung (102), wobei die dritte Einrichtung angeschlossen ist, um die i-ten ersten und i-ten zweiten Operandendaten zu empfangen, und angeschlossen ist, um den i-ten ersten Übertrag von der ersten Einrichtung zu empfangen, wobei die dritte Einrichtung einen i-ten zweiten Übertrag erzeugt, welcher der nächsten (i-1)-ten Block-Übertragseinheit zugeführt wird; und

eine vierte Einrichtung (110), wobei die vierte Einrichtung angeschlossen ist, um den i-ten ersten Übertrag zu empfangen, und angeschlossen ist, um einen dritten Übertrag von einer vorausgehenden (i+1)-ten Block-Übertragseinheit zu empfangen, wobei der dritte Übertrag einem vorausgehenden (i+1)-ten zweiten Übertrag entspricht, der von der dritten Einrichtung der vorausgehenden (i+1)-ten Block-Übertragseinheit erzeugt ist, wobei die vierte Einrichtung eine Koinzidenzprüfung zwischen dem i-ten ersten Übertrag und dem dritten Übertrag durchführt, um den Binäraddierer auf einen Fehler hin zu prüfen.

2. Binäraddierer nach Anspruch 1, ferner mit:

einer fünften Einrichtung (70), wobei die fünfte Einrichtung angeschlossen ist, um den ersten Übertrag von der ersten Einrichtung zu empfangen, wobei die fünfte Einrichtung angeordnet ist, um die ersten Operandendaten plus ein daran angehängtes erstes Paritätsbit zu empfangen, und ebenfalls angeordnet ist, um die zweiten Operandendaten plus ein daran angehängtes zweites Paritätsbit zu empfangen, wobei die fünfte Einrichtung ein drittes Paritätsbit vorausberechnet und das dritte Paritätsbit erzeugt;

einer sechsten Einrichtung (50), wobei die sechste Einrichtung angeschlossen ist, um die von der zweiten Einrichtung erzeugte resultierende Summe zu speichern;

einer siebten Einrichtung (72), wobei die siebte Einrichtung angeschlossen ist, um das dritte Paritätsbit von der fünften Einrichtung zu speichern; und

einer achten Einrichtung (74), wobei die achte Einrichtung an die sechste und siebte Einrichtung angeschlossen ist und eine Paritätsprüfung an der resultierenden Summe und dem dritten Paritätsbit durchführt.

3. Binäraddierer nach Anspruch 1 oder 2, ferner mit:

einer neunten Einrichtung (42), wobei die neunte Einrichtung an die zweite Einrichtung angeschlossen ist und eine Übertragerzeugungsvariable erzeugt, wobei die Übertragerzeugungsvariable einer anderen Block-Übertragseinheit zugeführt wird; und

einer zehnten Einrichtung (44), wobei die zehnte Einrichtung an die zweite Einrichtung angeschlossen ist und eine Übertragweiterreichungsvariable erzeugt, wobei die Übertragweiterreichungsvariable einer anderen Block-Übertragseinheit zugeführt wird.

4. Binäraddierer mit N Block-Übertragseinheiten (BCLA-Einheiten 0-3), N≥2, und einen Block-Eingangsübertrag-Generator (92'), wobei der Block-Eingangsübertrag-Generator außerhalb der N Block-Übertragseinheiten vorgesehen ist und an diese angeschlossen ist, wobei der Block-Eingangsübertrag-Generator N-1 Eingangsüberträge erzeugt, welche jeweils der entsprechenden der N-1 Block-Übertragseinheiten zugeführt werden, wobei die N-1 Eingangsüberträge aus N-1 Übertragerzeugungsvariablen (G(n)) und N-1 Übertragweiterreichungsvariablen (P(n)), die von den entsprechenden N-1 Block-Übertragseinheiten herkommend empfangen werden, unter Verwendung eines Übertrags-Schemas erzeugt werden, wobei die i-te Block-Übertragseinheit, mit i=0...N-1, aufweist:

eine erste Einrichtung (40), wobei die erste Einrichtung angeschlossen ist, um den i-ten Eingangsübertrag von dem Block-Eingangsübertrag-Generator zu empfangen, wobei die erste Einrichtung ferner zu addierende i-te erste und i-te zweite Operandendaten empfängt und eine resultierende Summe der i-ten ersten und i-ten zweiten Operandendaten und des i-ten Eingangsübertrags erzeugt und eine i-te Übertragerzeugungsvariable und eine i-te Übertragweiterreichungsvariable erzeugt;

eine zweite Einrichtung (102), wobei die zweite Einrichtung angeschlossen ist, um die i-ten ersten und i-ten zweiten Operandendaten zu empfangen, und angeschlossen ist, um den i-ten Eingangsübertrag von dem Block-Eingangsübertrag-Generator zu empfangen, wobei die zweite Einrichtung einen i-ten ersten Übertrag erzeugt, der einer nächsten (i-1)-ten Block-Übertragseinheit zugeführt wird; und

eine dritte Einrichtung (110), wobei die dritte Einrichtung angeschlossen ist, um den i-ten Eingangsübertrag von dem Block-Eingangsübertrag-Generator zu empfangen, und angeschlossen ist, um einen zweiten Übertrag von einer vorausgehenden (i+1)-ten Block-Übertragseinheit zu empfangen, wobei der zweite Übertrag einem vorausgehenden (i+1)-ten ersten Übertrag entspricht, der von der zweiten Einrichtung der vorausgehenden (i+1)-ten Block-Übertragseinheit erzeugt ist, wobei die dritte Einrichtung eine Koinzidenzprüfung zwischen dem i-ten Eingangsübertrag und dem zweiten Übertrag durchführt, um den Binäraddierer auf einen Fehler hin zu prüfen.

**5.** Binäraddierer nach Anspruch 4, ferner mit:

einer vierten Einrichtung (70), wobei die vierte Einrichtung angeschlossen ist, um den Eingangsübertrag von dem Block-Eingangsübertrag-Generator zu empfangen, wobei die vierte Einrichtung angeordnet ist, um die ersten Operandendaten plus ein daran angehängtes erstes Paritätsbit zu empfangen, und ebenfalls angeordnet ist, um die zweiten Operandendaten plus ein daran angehängtes zweites Paritätsbit zu empfangen, wobei die vierte Einrichtung ein drittes Paritätsbit vorausberechnet und das dritte Paritätsbit erzeugt;

einer fünften Einrichtung (50), wobei die fünfte Einrichtung angeschlossen ist, um die von der ersten Einrichtung erzeugte resultierende Summe zu speichern;

einer sechsten Einrichtung (72), wobei die sechste Einrichtung angeschlossen ist, um das dritte Paritätsbit von der vierten Einrichtung zu speichern; und

einer siebten Einrichtung (74), wobei die siebte Einrichtung an die fünfte und sechste Einrichtung angeschlossen ist und eine Paritätsprüfung an der resultierenden Summe und dem dritten Paritätsbit durchführt.

**6.** Binäraddierer nach Anspruch 5, ferner mit:

einer achten Einrichtung (42), wobei die achte Einrichtung an die erste Einrichtung angeschlossen ist und eine Übertragerzeugungsvariable erzeugt, wobei die Übertragerzeugungsvariable dem Block-Eingangsübertrag-Generator zugeführt wird; und

einer neunten Einrichtung (44), wobei die neunte Einrichtung an die erste Einrichtung angeschlossen ist und eine Übertragweiterreichungsvariable erzeugt, wobei die Übertragweiterreichungsvariable dem Block-Eingangsübertrag-Generator zugeführt wird.

## Revendications

**1.** Additionneur binaire incluant N unités de report de bloc anticipé (unités BCLA 0-3), $N \geq 2$, chaque ième unité de report de bloc anticipé, dans laquelle $i=0...N-1$, comprenant :

des premiers moyens (38), lesdits ièmes premiers moyens étant disposés pour recevoir $N-i-1$ variables de génération de report (G(n)) et $N-i-1$ variables de propagation de report (P(n)) provenant des $N-i-1$èmes unités précédentes de report de bloc anticipé, lesdits premiers moyens générant un ième premier report en utilisant une méthode de report anticipé ;

des seconds moyens (40), lesdits seconds moyens couplés pour recevoir ledit premier report provenant desdits premiers moyens, lesdits seconds moyens recevant en outre des ièmes premières et ièmes secondes données d'opérandes devant être ajoutées et générant une somme résultante desdites ièmes premières et ièmes secondes données d'opérandes et dudit ième premier report, et générant une ième variable de génération de report et une ième variable de propagation de report ;

des troisièmes moyens (102), lesdits troisièmes moyens couplés pour recevoir lesdites ièmes premières et ièmes secondes données d'opérandes, et couplés pour recevoir ledit ième premier report provenant desdits premiers moyens, lesdits troisièmes moyens générant un ième second report devant être appliqué à une (i-1)ième unité de report de bloc anticipé suivante ; et

des quatrièmes moyens (110), lesdits quatrièmes moyens couplés pour recevoir ledit ième premier report et couplés pour recevoir un troisième report provenant d'une (i-1)ième unité de report de bloc anticipé précédente, ledit troisième report correspondant à un (i+1)ième second report précédent généré par lesdits troisièmes moyens de ladite (i+1)ième unité de report de bloc anticipé précédente, lesdits quatrièmes moyens effectuant un contrôle de coïncidence entre ledit ième premier report et ledit troisième report de manière à détecter une erreur dans ledit additionneur binaire.

**2.** Additionneur binaire selon la revendication 1, comprenant en outre :

des cinquièmes moyens (70), lesdits cinquièmes moyens couplés pour recevoir ledit premier report provenant desdits premiers moyens, lesdits cinquièmes moyens étant disposés pour recevoir lesdites premières données d'opérandes plus un premier bit de parité associé à celles-ci, et également disposés pour recevoir lesdites secondes données d'opérandes plus un second bit de parité associé à celles-ci, lesdits cinquièmes moyens prédisant un troisième bit de parité et générant ledit troisième bit de parité ;

des sixièmes moyens (50), lesdits sixièmes moyens couplés pour mémoriser ladite somme résultante générée par lesdits seconds moyens ;

des septièmes moyens (72), lesdits septièmes moyens couplés pour mémoriser ledit troisième bit de parité provenant desdits cinquièmes moyens ; et

des huitièmes moyens (74), lesdits huitièmes moyens couplés auxdits sixièmes et septièmes moyens et effectuant un contrôle de parité sur la somme résultante et ledit troisième bit de parité.

3. Additionneur binaire selon la revendication 1 ou 2, comprenant en outre :

des neuvièmes moyens (42), lesdits neuvièmes moyens couplés auxdits seconds moyens et produisant une variable de génération de report, ladite variable de génération de report étant appliquée à une autre unité de report de bloc anticipé ; et
des dixièmes moyens (44), lesdits dixièmes moyens couplés auxdits seconds moyens et produisant une variable de propagation de report, ladite variable de propagation de report étant appliquée à une autre unité de report de bloc anticipé.

4. Additionneur binaire incluant N unités de report de bloc anticipé (unités BCLA 0-3), N≥2, et un générateur d'entrée de report de bloc (92'), ledit générateur d'entrée de report de bloc anticipé étant prévu à l'extérieur desdites N unités de report de bloc anticipé et étant couplé à celles-ci, ledit générateur d'entrée de report de bloc produisant N-1 entrées de report qui sont appliquées à l'une, correspondante, des N-1 unités de report de bloc anticipé, lesdites N-1 entrées de report étant générées à partir des N-1 variables de génération de report (G(n)) et des N-1 variables de propagation de report (P(n)) reçues à partir des N-1 unités de report de bloc anticipé correspondantes en utilisant la méthode de report anticipé, la ième unité de report de bloc anticipé, i=0...N-1, comprenant :

des premiers moyens (40), lesdits premiers moyens couplés pour recevoir ladite ième entrée de report provenant dudit générateur d'entrée de report de bloc, lesdits premiers moyens recevant en outre des ièmes premières et ièmes secondes données d'opérandes devant être ajoutées en générant une somme résultante desdites ièmes premières et ièmes secondes données d'opérandes et de la ième entrée de report, et générant la ième variable de génération de report et la ième variable de propagation de report ;
des seconds moyens (102), lesdits seconds moyens couplés pour recevoir lesdites ièmes premières et ièmes secondes données d'opérandes et couplés pour recevoir ladite ième entrée de report provenant dudit générateur d'entrée de report de bloc, lesdits seconds moyens générant un ième premier report devant être appliqué à une (i-1)iéme unité de report de bloc anticipé suivante ; et
des troisièmes moyens (110), lesdits troisièmes moyens couplés pour recevoir ladite ième entrée de report provenant dudit générateur d'entrée de report de bloc anticipé et couplés pour recevoir un second report provenant d'une (i+1)ième unité de report de bloc anticipé précédente, ledit second report correspondant à un (i+1)ième premier report précédent généré par lesdits seconds moyens de ladite (i+1)ième unité de report de bloc anticipé précédente, lesdits troisièmes moyens effectuant un contrôle de coïncidence entre ladite ième entrée de report et ledit second report de manière à détecter une erreur dans ledit additionneur binaire.

5. Additionneur binaire selon la revendication 4, comprenant en outre :

des quatrièmes moyens (70), lesdits quatrièmes moyens couplés pour recevoir ladite entrée de report provenant dudit générateur d'entrée de report de bloc, lesdits quatrièmes moyens étant disposés pour recevoir lesdites premières données d'opérandes plus un premier bit de parité associé à celles-ci, et également disposés pour recevoir lesdites secondes données d'opérandes plus un second bit de parité associé à celles-ci, lesdits quatrièmes moyens prédisant un troisième bit de parité et générant ledit troisième bit de parité ;
des cinquièmes moyens (50), lesdits cinquièmes moyens couplés pour mémoriser ladite somme résultante générée par lesdits premiers moyens ;
des sixièmes moyens (72), lesdits sixièmes moyens couplés pour mémoriser ledit troisième bit de parité provenant desdits quatrièmes moyens ; et
des septièmes moyens (74), lesdits septièmes moyens couplés auxdits cinquièmes et sixièmes moyens effectuant un contrôle de parité sur la somme résultante et ledit troisième bit de parité.

6. Additionneur binaire selon la revendication 5, comprenant en outre :

des huitièmes moyens (42), lesdits huitièmes moyens couplés auxdits premiers moyens et produisant une variable de génération de report, ladite variable de génération de report étant appliquée audit générateur d'entrée de report de bloc ; et
des neuvièmes moyens (44), lesdits neuvièmes moyens couplés auxdits premiers moyens et produisant une variable de propagation de report, ladite variable de propagation de report étant appliquée audit générateur d'entrée de report de bloc.

FIG. 1
(PRIOR ART)

BCLA = BLOCK
CARRY
LOOK-
AHEAD

$J(x) = J(0) \sim J(6)$
$I(x) = I(0) \sim I(6)$

EP 0 401 783 B1

FIG. 2
(PRIOR ART)

# FIG.3

## BLOCK CARRY-IN GENERATION

| BCLA UNITS | INPUT SIGNALS TO BLOCK CARRY-IN GENERATOR 38 | | | | | | | OUTPUT SIGNALS OF BLOCK CARRY-IN GENERATOR |
|---|---|---|---|---|---|---|---|---|
| | I(0) | I(1) | I(2) | I(3) | I(4) | I(5) | I(6) | $I(0)+I(1)I(3)+$ $I(2)I(4)I(3)+$ $I(5)I(4)I(3)I(6)$ |
| 0 | Gd(1) | Gd(2) | Gd(3) | Pd(1) | Pd(2) | Pd(3) | Cd | $Gd(1)+Gd(2)Pd(1)+$ $Gd(3)Pd(2)Pd(1)+$ $Pd(3)Pd(2)Pd(1)Cd$ |
| 1 | 0 | Gd(2) | Gd(3) | 1 | Pd(2) | Pd(3) | Cd | $Gd(2)+Gd(3)Pd(2)+$ $Pd(3)Pd(2)Cd$ |
| 2 | 0 | 0 | Gd(3) | 1 | 1 | Pd(3) | Cd | $Gd(3)+Pd(3)Cd$ |
| 3 | 0 | 0 | 0 | 1 | 1 | 1 | Cd | Cd |

EP 0 401 783 B1

# FIG. 4

BLOCK CARRY-IN GENERATION

| BCLA UNITS | INPUT SIGNALS TO BLOCK CARRY-IN GENERATOR 68 | | | | | | | OUTPUT SIGNALS OF BLOCK CARRY-IN GENERATOR |
|---|---|---|---|---|---|---|---|---|
| | J(0) | J(1) | J(2) | J(3) | J(4) | J(5) | J(6) | J(0)+J(1)J(3)+ J(2)J(4)J(3)+ J(5)J(4)J(3)J(6) |
| 0 | Gp(1) | Gp(2) | Gp(3) | Pp(1) | Pp(2) | Pp(3) | Cp | Gp(1)+Gp(2)Pp(1)+ Gp(3)Pp(2)Pp(1)+ Pp(3)Pp(2)Pp(1)Cp |
| 1 | 0 | Gp(2) | Gp(3) | 1 | Pp(2) | Pp(3) | Cp | Gp(2)+Gp(3)Pp(2)+ Pp(3)Pp(2)Cp |
| 2 | 0 | 0 | Gp(3) | 1 | 1 | Pp(3) | Cp | Gp(3)+Pp(3)Cp |
| 3 | 0 | 0 | 0 | 1 | 1 | 1 | Cp | Cp |

EP 0 401 783 B1

FIG. 5
(PRIOR ART)

$10'$

EP 0 401 783 B1

# FIG. 6
(PRIOR ART)

# FIG.7

## BLOCK CARRY-IN GENERATION

| BCLA UNITS | Cd(X) | LOGICAL EXPRESSION FOR BLOCK CARRY-IN (Cd(X)) GENERATION |
|---|---|---|
| 0 | Cd(0) | Gd(1) + Gd(2)Pd(1) + Gd(3)Pd(2)Pd(1) + Pd(3)Pd(2)Pd(1)CId |
| 1 | Cd(1) | Gd(2) + Gd(3)Pd(2) + Pd(3)Pd(2)CId |
| 2 | Cd(2) | Gd(3) + Pd(3)CId |
| 3 | Cd(3) | CId |

EP 0 401 783 B1

# FIG. 8

100

BCLA = BLOCK
CARRY
LOOK-
AHEAD

I(x) = I(0)~I(6)

EP 0 401 783 B1

# FIG. 9

FIG. 10

EP 0 401 783 B1

# FIG. 11